# EUROPEAN PATENT APPLICATION

(11) **EP 2 723 047 A1**
(43) Date of publication of application: **23.04.2014**
(21) Application number: 13182597.8
(22) Date of filing: 02.09.2013
(51) Int. Cl.: H04M 1/725, H04W 8/22

(54) **Handling of configuration parameters in a wireless modem**

(30) Priority: 18.10.2012 EP 12189062
(71) Applicant: ST-Ericsson SA, 1228 Genève Plan-les-Ouates (CH)
(72) Inventor: Thorell, Per, 224 72 Lund (SE); Gullberg, Mikael, 211 54 Malmö (SE); Möhle, Marco, 244 32 Kävlinge (SE)
(74) Representative: Valea AB

(57) **Abstract**

A wireless modem for configuration of one or more features for the wireless modem is provided. The wireless modem comprises a database comprising multiple layers. Each layer out of the multiple layers is related to a level of priority. The method comprises configuring the content of the layers in the database by loading at least one parameter value into a specific layer out of the multiple layers. The method further comprises requesting a specific parameter in the database, which specific parameter out of a set of parameters is present in more than one of the multiple layers and returning from the database a value for the specific parameter from a layer with the highest level of priority out of the multiple layers. According to other aspects, other embodiments herein relate to a wireless modem, a wireless device and to an integrated circuit.

## Description

### TECHNICAL FIELD

Embodiments herein relate to the handling of one or more configuration parameters in a wireless modem.

### BACKGROUND

Values for modem configuration parameter settings may come from many different sources. For example, a modem R&D organization may provide a first set of generic default values. However, modem parameters of specific product variants may override some of the generic default values. Further, the configuration settings may be refined by customer projects and by an equipment manufacturer, e.g. an Original Equipment Manufacturer (OEM). Furthermore, some of the configuration parameter values may be reconfigured during run-time depending on for example an International Mobile Subscriber Identity (IMSI) number on the on a Subscriber Identity Module (SIM) card. These parameter values may in turn be overridden by an application Central Processing Unit (CPU) controlling the modem.

With all these actors responsible for setting parameter values it is often hard to know whose parameter value the wireless modem should use. For example, updates of a generic default parameter value may not affect the value of a customized parameter.

With current parameter storage systems it is not easy to know from where a specific configuration value originated. If one provider of configuration parameter values decides to change the value of a configuration parameter it is difficult to know if the value should be used or not, since it may have been overridden by a more specialized configuration.

US 7,529,543 A1 relates to configuring a device including determining that the configurable device has initiated interaction with an environment. The configurable device is queried to obtain a device request. The device request is made by the configurable device to obtain configuration values for specific configuration parameters. A preference indicates a configuration value for a configuration parameter, and a set of preferences includes at least one of a user preference, a device-specific preference, and an environment-specific preference. The configuration values for the specific configuration parameters are identified according to the set of preferences. A configuration instruction providing the configuration values for specific configuration parameters is generated and transmitted to the configurable device.

US 7,925,715 B2 discloses an apparatus, methods, and programs for servicing persistent storage items on a wireless device. The disclosure includes a wireless device having a computer platform with a module operable to retrieve and/or change persistent storage items on the wireless device based on a received configuration. The wireless device may further include an access module operable to either permit or deny access to persistent storage items based on information associated with the configuration. The embodiments may also include an apparatus operable to receive information relating to the activity performed with respect to the persistent storage items and to generate a corresponding report.

US 2009/0181662 A1 disclose methods, systems, and a computer-readable medium for providing telecommunications carrier configuration at activation of a wireless device. In one implementation, a method is provided. The method includes receiving a request for activation of a wireless device, and during activation of the wireless device, determining for the wireless device a telecommunications carrier from a number of telecommunications carriers, and identifying information associated with the determined telecommunications carrier for configuring the wireless device.

The documents mentioned above all relate to the configuration of a mobile phone. However, when a plurality of configuration parameters are used, e.g. configuration parameter values from default settings, configuration parameter values reconfigured during run-time or by a hardware specific configuration, it is difficult to know if a parameter value, or a set of parameters, should be used or not, since it may have been overridden by another configuration. Typically, if a plurality of configuration settings is provided by multiple organizations, i.e. by multiple entities, it is difficult to handle the configurations settings in a correct way, resulting in incorrect behavior.

### SUMMARY

An object of embodiments herein is to provide an improved way of handling configuration settings in a modem.

According to a first aspect the object is achieved a method in a wireless modem for configuration of one or more features for the wireless modem. The wireless modem comprises a database comprising multiple layers. Each layer out of the multiple layers is related to a level of priority. The wireless modem configures the content of the layers in the database by loading at least one parameter value into a specific layer out of the multiple layers. The wireless device requests a specific parameter out of a set of parameters in the database, which specific parameter out of the set of parameters is present in more than one of the multiple layers and returns from the database a value for the specific parameter from a layer with the highest level of priority out of the multiple layers.

According to a second aspect the object is achieved by a wireless modem being adapted to configure one or more features for the wireless modem. The wireless modem comprises a database, which database comprises multiple layers. Each layer out of the multiple layers is related to a level of priority. The wireless modem is further associated with a Software, SW, configuration control adapted to configure the content of the layers in the database by loading at least one parameter value into a specific layer out of the multiple layers. A specific parameter out of a set of parameters in the database is requested, which specific requested parameter out of the set of parameters is present in more than one of the multiple layers. The wireless modem further comprises a database engine adapted to return from the database a value for the specific requested parameter from a layer with the highest level of priority out of the multiple layers.

According to a third aspect, the object is achieved by a wireless device comprising such a wireless modem.

According to a fourth aspect, the object is achieved by an integrated circuit comprising circuitry adapted to perform the method.

According to a fifth aspect, the object is achieved by a wireless modem comprising such an integrated circuit.

Since a parameter value is present in more than one of the multiple layers, and the database engine returns the value from the highest priority layer, the relevant parameter value to be used will be returned on a request.

### BRIEF DESCRIPTION OF THE DRAWINGS

Examples of embodiments herein are described in more detail with reference to attached drawings in which:
Figure 1 is a schematic block diagram illustrating embodiments of a wireless communications system;
Figure 2 is a schematic block diagram illustrating embodiments of a wireless modem;
Figure 3 is a flowchart depicting embodiments of methods herein;
Figure 4 is a schematic block diagram illustrating alternative embodiments of a wireless modem;
Figure 5 is a schematic block diagram illustrating embodiments of a layered parameter database;
Figure 6 is a schematic block diagram illustrating embodiments of a parameter database cache; and
Figure 7 is a flowchart depicting embodiments of methods herein.

### DETAILED DESCRIPTION

Embodiments herein will be exemplified in the following non-limiting description.

To solve the problems with existing solutions, some embodiments herein utilizes a layered database for storing configuration settings. The layered database is comprised in a modem. A parameter value is present in more than one layer. Each layer in the layered database may have a unique priority and may comprise a set of configuration parameters.

Some embodiments herein relate to a **wireless device 110,** e.g. a wireless communication device such as a cellular phone which is operating in a wireless communication system. The wireless communication system may comprise one or more wireless devices 110, one or more access nodes, e.g. radio network nodes, such as base stations serving the one or more wireless devices 110. Further, the wireless communication system may comprise a wireless communication network or a wireless network.

In particular, some embodiments herein relate to the configuration of one or more features in a **wireless modem 112** and the managing of multiple wireless modem configurations. The multiple wireless modem configurations may for example be concurrently stored in the wireless device 110.

The wireless modem 112 may be comprised in the wireless device 110, e.g., a mobile phone. Further, the wireless modem 112 provides wireless connectivity for speech and data between the wireless device 110 and a wireless network. Modem platforms, such as generic modem platforms, may be used in many different types of wireless devices 110 and connected devices, i.e. wireless devices 110 connected to a wireless communication network. The modem platforms may support different access technologies such as Global System for Mobile Communications, originally *Groupe Spécial Mobile* GSM, Wideband Code Division Multiple Access WCDMA) and Long Term Evolution LTE) and may be configured to run in wireless networks operated by mobile network operators around the world.

The wireless modem 112 may be integrated in the wireless device 110 such as a mobile phone. As part of the integration work, the modem part of the wireless device 110 is configured and a number of parameters that controls the behaviour of a software running inside the wireless modem 112 are set. Some of these setting may enable or disable certain services or protocols in the wireless modem 112. Other settings may give the generic modem platform information about the hardware of the wireless device 110, such as the surrounding phone hardware.

Due to differences in e.g. used frequency bands, protocols, and services in different wireless networks, the wireless modem 112 needs to be configured to work optimally with the network configurations used by different wireless network operators. When a **client 210,** e.g. a modem algorithm module 211 or a modem feature module 212, to the database 202 reads a parameter value a **layered database engine 221** returns the value from the layer with the highest priority.

In some embodiments, each layer typically comprises configuration settings for a specific purpose. A layer may for example comprise settings to optimize the modem software, SW, for a specific operator or for a geographical region.

In a system where the configuration is done by multiple parties, the management and maintenance of parameter value settings may be easier if each party puts its settings in a separate layer. A low priority layer may comprise default values for a specific modem platform product. This layer may be defined by the R&D organization of the modem platform vendor and may be completely or partly overridden by default values for a specific platform configuration or a wireless device 110 model. These values may in turn be overridden by operator specific parameter values or parameter settings explicitly done by the user of the wireless device 110. Easy reconfiguration of the modem platform is provided by enable exchanging of the values stored in a specific layer of the layered database.

In order to simplify the implementation and make a clear division of tasks within the modem SW, the control and storage functionality may be divided into two distinct parts; a first part and a second part. However, it should be understood that the two parts may be integrated into a single part. The first part relates to a high level configuration control module that decides which configuration profile(-s) that should be active at a given point in time. The second part relates to a database engine 221 with support for organizing data in prioritized layers. The database serves the clients 210 with configuration information based on the active configuration decided by the high level configuration control module.

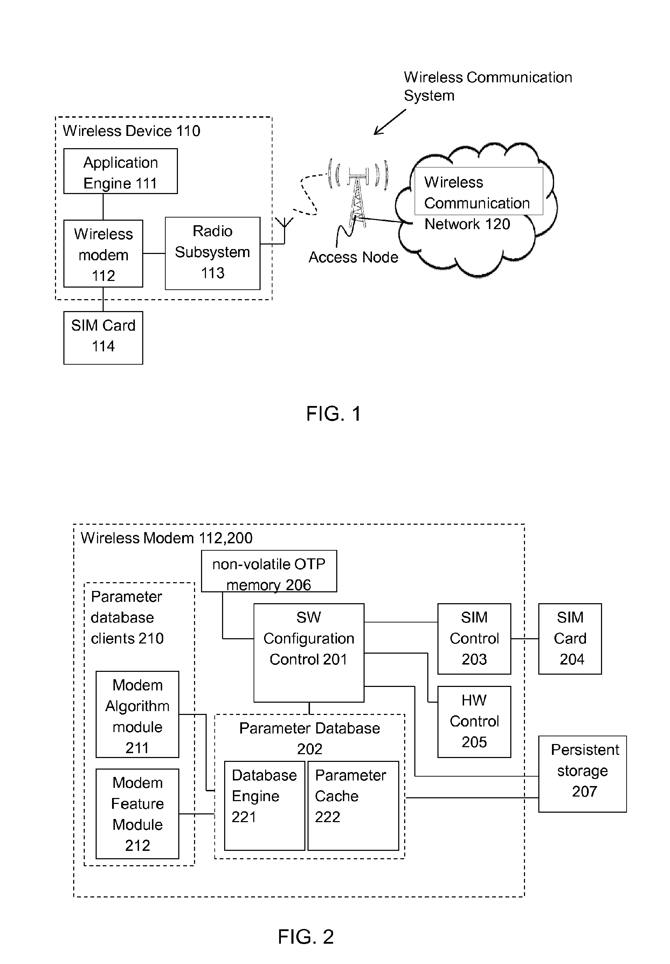

**Figure 1** schematically illustrates some embodiments of a wireless communication system.

Some embodiments herein relates to a system for configuring components in **a wireless device 110.** The wireless device 110 may be a mobile device, a cellular phone or other equipment capable to communicate with a **wireless communication network 120,** e.g. a user equipment, a mobile terminal or a wireless terminal, a mobile phone, a computer such as e.g. a laptop, a Personal Digital Assistants (PDAs or a tablet computer, sometimes referred to as a surf plate, with wireless capability, or any other wireless device.

The wireless device 110 may be configured to directly communicate with the wireless communication network 120 or it may be configured to indirectly communicate with the wireless communication network 120 via an access node, such as a radio network node, e.g. a base station.

The wireless device 110 typically comprises a number of components. It may comprise **an application engine 111, a wireless modem 112, and a radio subsystem 113.** The application engine 110 may execute applications such as web browsers, games, or the user interface for a voice call application.

The wireless modem 112 implements protocols, algorithms and signal processing to convert the data steams generated by the application engine into signals that may be transmitted wirelessly to an access node in a wireless network. Further, the wireless modem 112 also processes downlink signals coming from the antenna and the radio subsystem 113 and converts them to data streams that may be handled by the applications running in the application engine.

The radio subsystem 113 may consist of a radio front end that amplifies the uplink radio signal before it is sent to the antenna. It may also include functionality for filtering and amplifying the downlink radio signal coming from the antenna.

In order to operate with full functionality, some wireless devices 110 may require **a Subscriber Identity Module, SIM, card 114** or similar to be inserted into or to be connected to the wireless device 110. The SIM card may comprise subscriber information and credentials needed to connect to the wireless communication network. Depending on the Wireless Network technology the SIM card may have other names such as Universal SIM (USIM), Removable User Identity Module (R-UIM) or CDMA SIM (CSIM).

The components in the wireless device 110 may need to be configured to operate optimally. In particular, the wireless modem 112 and the Radio Subsystem 113 may need to be configured differently depending on the wireless network it is connected to. Moreover, the wireless modem 112 may be responsible for setting configuration parameters in the radio subsystem 113. This configuration of the radio subsystem typically differs between different types of radio subsystems used in wireless devices 110.

**Figure 2** schematically illustrates some embodiments of **a wireless modem 200**. It should be understood that the wireless modem 112 mentioned above in relation to Figure 1 may be a wireless modem 200 which now will be described with reference to Figure 2. **A Software, SW, configuration control 201** is located within the wireless modem 200, and is responsible for configuring **a Parameter Database 202** based on e.g. the environment where the wireless modem 200 operates. The SW configuration control 201 may get information needed to decide on the current configuration profiles from different sources. These sources may differ between different embodiments.

Some sources that may be used to determine the configuration of the database 202 in the wireless modem 112 is mentioned below:
- In some embodiments, the SW configuration control 201 may obtain operator information from the SIM Card 114 via **a SIM control 203.**
- In some other embodiments, the SW configuration control 201 may obtain information about a Radio Subsystem 113 configuration. **A Hardware, HW, control 205** may in some embodiments also provide information on other components or subsystems in the wireless device 110 to the SW configuration control.
- In still some other embodiments, the SW configuration control 201 may obtain information about the hardware configuration from **a memory 206,** e.g. from a non-volatile One Time Programmable, OTP, memory. The non-volatile OTP memory may be programmed with information about the current HW configuration during production.
- In some other embodiments, the SW configuration control 201 may obtain information about the hardware configuration inside or outside the wireless modem from **a storage 207,** e.g. from a persistent storage. The persistent storage may be a non-volatile memory NAND Flash type. However, as understood by those skilled in the art other realizations of the persistent storage are possible. The persistent storage may comprise information about the current HW configuration or other configuration information e.g. regarding one or more Wireless Networks that the modem may connect to.
- In some other embodiments, the SW configuration control 201 may obtain information needed from configuration files that may be stored in a memory, e.g. non-volatile memory, such as a memory of NAND Flash type, which may be connected directly to the wireless modem 200. The configuration files may alternatively be stored on a remote file system hosted by e.g. the application engine 111 or on a server comprised in or connected to the Wireless communication network 120.

Many different clients 210, e.g. parameter database clients 210, may use the database 202 for obtaining configuration information. A **Modem Feature module 212** may implement a specific modem feature and may for example use a parameter in the database to determine if the feature should be activated or not. **A Modem Algorithm module 211** may implement crucial parts in modem data reception and may read algorithm parameters from the database 202.

The clients 210 may read the information that they need from the parameter database at e.g. system startup. The SW configuration control 201 may determine that a reconfiguration of the clients 210 is needed while the wireless modem is up and running, i.e. after a part of the system has completed its startup phase. This may for example be triggered by an exchange of the SIM card connected to the wireless modem.

If the SW configuration control 201 determines that the configuration needs to be changed after clients 210 have started to access the database 202 the SW configuration control may in some embodiments stop further accesses to the Parameter Database 202, prepare reconfiguration of the database 202, and/or restart the whole system or the subset of the clients 210 that are affected by the configuration change.

In some other embodiments, the SW configuration control 201 and/or the parameter database 202 may notify affected clients 210 that a reconfiguration of the database has been performed. The clients 210 may reread the values of their parameters.

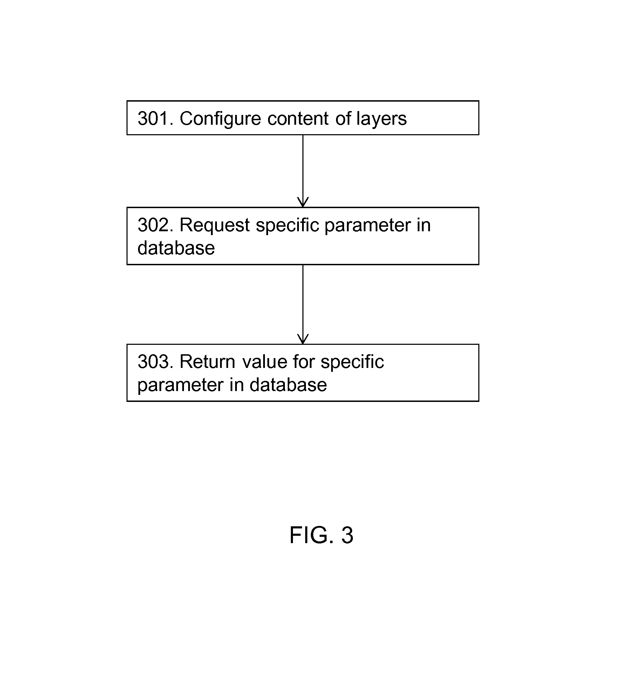

With reference to **Figure 3****,** a method in the wireless modem 112 for configuration of one or more features for the wireless modem 112 will now be described. As mentioned above the wireless modem 112 comprises a database 202, which database 202 comprises multiple layers. Each layer out of the multiple layers is related to a level of priority.

### Action 301

The wireless modem 112 configures the content of the layers in the database 202 by loading at least one parameter value into a specific layer out of the multiple layers. Since each layer out of the multiple layers is related to a level of priority, the loaded parameter value will be related to a specific level of priority. In some embodiments the SW configuration control 201 produces a list of configuration profiles that may define the current active configuration settings in the modem. In this description, reference is sometimes made to a "list", however it should be understood that it does not have to be a list but it may be a set, composition, structure, etc. or any other kind of information carrying entity configured to comprise information relating to configuration settings. The profiles in the list may be sorted. For example, the profiles may be sorted in priority order where the highest priority profile may be located first in the list. The list of active configuration settings may change during the execution of the modem. When the list has been updated, the SW configuration control 201 may send the list of active configuration profiles to the database 202. The updated SW configuration control 201 may also send an initial list of active configuration profiles to the database 202 during e.g. the startup process of the wireless modem 200.

In some other embodiments, the SW configuration control 201 selects a set of active configuration profiles that should define the current active configuration settings in the modem. As values for the same configuration parameter may be present in more than one of the active profiles, a unique priority may be assigned to each of the active profiles. If values for the same configuration parameter are present in multiple active profiles, the value from the profile with the highest assigned priority will be used by the database 202. The SW configuration control 201 informs the database 202 about the set of active configuration profiles and their priorities at system startup. The SW configuration control 201 may be responsible for informing the database 202 about any updates in the set of active configuration profiles or their priorities.

The configuring of the content of the layers in the database 202 may comprise identifying operator information from a Subscriber Identity Module, SIM, card associated with the wireless modem 112, and loading a set of configuration parameters values into a specific layer based on the operator information.

The configuring of the content of the layers in the database 202 may further comprise identifying information of hardware components connected to the wireless modem 112, and loading a set of configuration parameter values into a specific layer based on the information on hardware components.

Still further, the wireless modem 112 may be associated with a memory 206 and the configuring of the content of the layers in the database 202 may further comprise reading information from the memory 206, and loading a set of configuration parameters values into a specific layer based on the information read from the memory 206. The SW configuration control 201 may obtain information about the hardware configuration from the memory 206, e.g. from a non-volatile One Time Programmable, OTP, memory. The non-volatile OTP memory may be programmed with information about the current HW configuration during production.

Configuring of the database 202 may also comprise replacing parameters in a specific layer of the database 202.

### Action 302

The wireless modem requests a specific parameter out of a set of parameters in the database 202. The specific parameter out of the set of parameters is present in more than one of the multiple layers in the database. Since each layer out of the multiple layers is related to a level of priority, each value of the requested parameter is also related to a level of priority.

### Action 303

A value for the specific requested parameter from a layer with the highest level of priority out of the multiple layers is returned from the database 202. This action of returning the value for the specific requested parameter from the database 202 may be performed by searching for the requested specific parameter in the layers of the layered database 202 in priority order, starting with the layer with the highest priority. If the specific parameter is found in a layer, returning the corresponding parameter value. If the requested parameter is not found in a layer, searching for the requested parameter in the next layer in priority order. Thus, if values for the same configuration parameter are present in multiple layers, the value from the layer with the highest assigned priority will be returned.

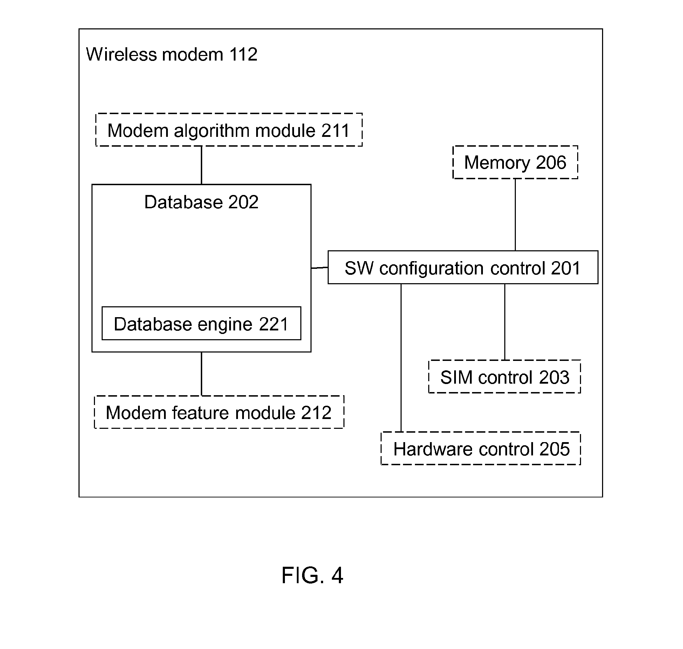

**Figure 4** schematically illustrates some embodiments of the wireless modem 112. The wireless modem 112 is adapted to configure one or more features for the wireless modem 112. The wireless modem 112 comprises the database 202, such as a Parameter Database, comprising multiple layers. Each layer out of the multiple layers is related to a level of priority.

The wireless modem further comprises the SW configuration control 201 adapted to configure the content of the layers in the database 202 by loading at least one parameter value into a specific layer out of the multiple layers. The SW configuration control 201 may be responsible for configuring the database 202 based on e.g. the environment where the wireless modem 112 operates. A specific parameter in the database 202 out of a set of parameters is present in more than one of the multiple layers. The wireless modem further comprises **a database engine 221** adapted to return from the database 202 a value for a specific requested parameter from a layer with the highest level of priority out of the multiple layers.

In some embodiments, the wireless modem 112 further comprises the SIM control 203 for identifying operator information from a Subscriber Identity Module, SIM, card associated with the wireless modem 112. The database engine 221 may then be adapted to load a set of configuration parameters values into a specific layer based on the identifying operator information, whereby the content of the layers in the database 202 is configured. The wireless modem 112 may further comprise the hardware control 205 for identifying information of hardware components connected to the wireless modem 112. The database engine 221 may be adapted to load a set of configuration parameters values into a specific layer based on the identified information on hardware components, whereby the content of the layers in the database 202 is configured. The wireless modem may further comprise the modem algorithm module 211 adapted to read algorithm parameters from the database 202. In some further embodiments, the wireless modem 112 further comprises the modem feature module 212 adapted to implement a specific modem feature by using a parameter in the database 202 to determine if the feature should be activated or not.

The wireless modem 112 may further be associated with a memory 206. The database engine 221 may be adapted to load a set of configuration parameters values into a specific layer based on the information from the memory 206. The content of the layers in the database 202 is thereby configured. The memory may be e.g. a non-volatile memory, such as a memory of NAND Flash type, which may be connected directly to the wireless modem 112. The configuration files may alternatively be stored on a remote file system hosted by e.g. the application engine 111 or on a server comprised in or connected to the Wireless communication network 120.

The database engine 221 may be adapted to search for the requested specific parameter in the layers of the layered database 202 in priority order starting with the layer with the highest priority, and, if the specific parameter is found in a layer, return the corresponding parameter value, or if the requested parameter is not found in a layer, search the next layer in priority order. Thus, if values for the same configuration parameter are present in multiple layers, the value from the layer with the highest assigned priority will be returned. The database engine 221 may further be adapted to configure the database 202 by replacing parameters in a specific layer of the database 202.

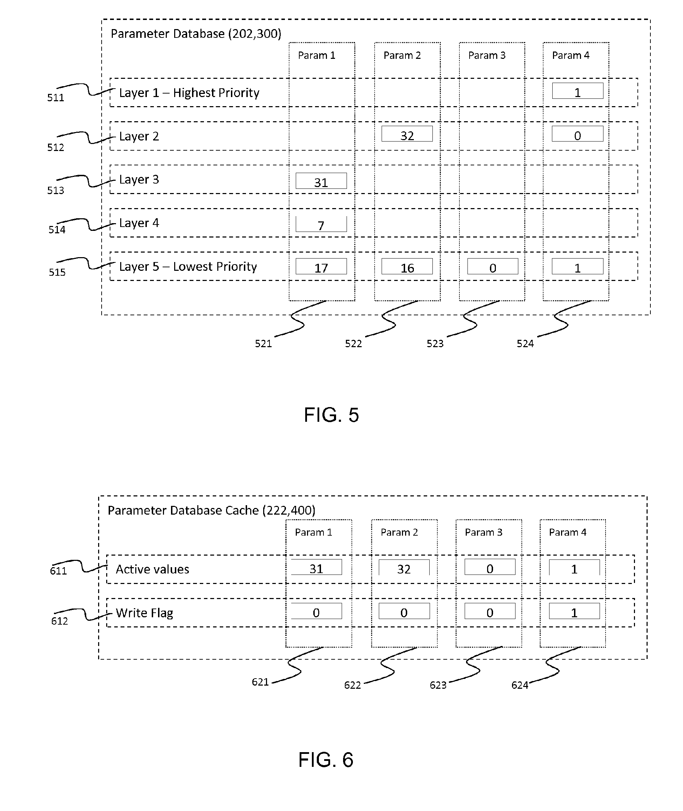

**Figure 5** schematically illustrates some embodiments of **a layered parameter database 300**. In some embodiments, the database 202 mentioned above is a layered parameter database 300.

In some embodiments, the layered parameter database 300 stores values for a number of parameters, Param, e.g. for Param 1, Param 2, Param 3 and Param 4, **521-524** in multiple layers, e.g. Layer 1, Layer 2, Layer 3, Layer 4, Layer 5, **511-515** where layer 1 has the highest priority and layer 5 has the lowest priority. A certain layer may comprise values for a subset of the parameters in the database 300.

Further, a parameter may have values in more than one layer. In such cases a parameter value in a layer with higher priority overrides a value for the same parameter in a layer with lower priority.

In some embodiments, clients 210 to the database 300 are allowed to enter, e.g. write, parameter values into the database. In such embodiments, the new parameter values may be entered, e.g. written, to the highest priority layer 511.

The layer with lowest priority 515 may comprise default values for all parameters in the database. This will ensure that a parameter value may be returned at all times for all parameters in the database 300.

The configuration control module, e.g. the SW configuration control 201 mentioned above, may decide to exchange a certain configuration profile. This relates to Action 301 explained above. The SW configuration control 201 may be arranged external of the database. Confer for example figure 2 wherein the SW configuration control 201 is arranged external of the database 202. Exchanging a certain configuration profile may result in a replacement of the values in one or more layers in the database. For example, Layer 3 513 may comprise configuration parameter values related to the wireless operator that has issued the SIM card. If the SIM card is replaced with a SIM card issued by a second operator, the SW configuration control 201 may tell the database engine 221 to replace the values in Layer 3 513 with a different set of values. Note that, in some embodiments, the set of parameters for the first operator may not comprise values for the same parameters as the set of parameters for the second operator.

The parameter values for different layers in the database may be stored in files on a persistent storage external to the modem. It is also possible to use a relational data base such as SQLite to store the same information.

**Figure 6** schematically illustrates some embodiments of **a parameter cache database 400.** In some embodiments, the database 202 mentioned above is a parameter cache database 400. In order to speed up the access of parameter values, the database engine 221 schematically illustrated in Figure 2 may cache parameter values in **a parameter cache 222.** The parameter cache 222 may use RAM Random Access Memory for caching the values. Storing all the values, including all the overridden values, in the cache 222 may consume too much expensive RAM memory. In such situation the Parameter Database Engine may store only non-overridden values in the cache 222.

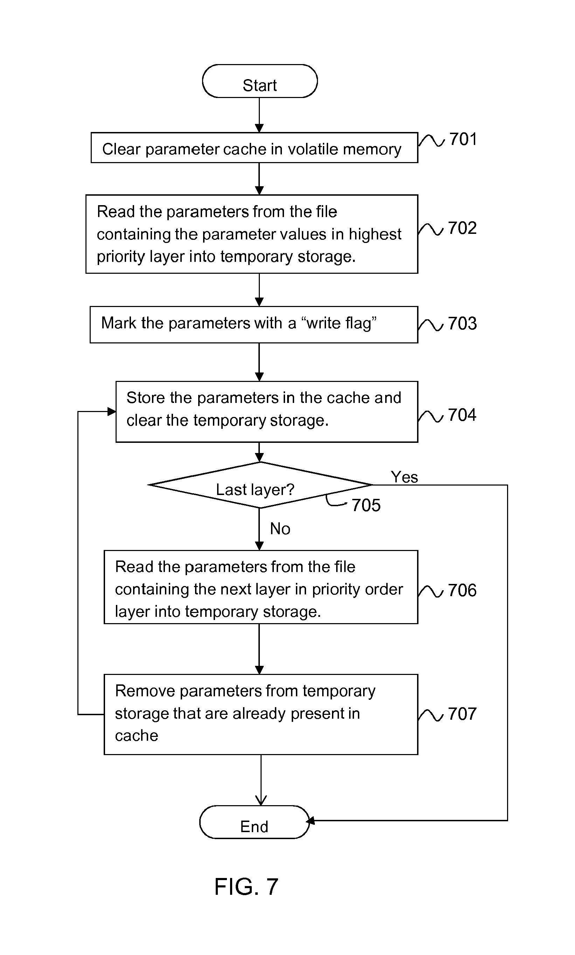

Exemplifying embodiments of method actions for the parameter cache database 400 will now be described. There are different ways of achieving the same result, but some first exemplifying embodiments will now be described. **Figure 7** is a schematic flow chart illustrating method actions 701-707 according to some embodiments described herein. The actions do not have to be performed in the order given in Figure 7, but may be taken in any suitable order. Further, actions may be combined.

### Action 701

The database engine may start by erasing the cache 222, thus by clearing parameter cache in a volatile memory. The database engine may for example start by erasing the cache 222, then iterate over all layers in priority order starting with the highest priority layer.

### Action 702

The requested parameters are read from the file containing the parameter values in highest priority layer into a temporary storage.

### Action 703

The parameters are marked with a "write flag". As the values in some layers, typically the highest priority layer, may have to be written back to persistent storage 207 before the modem shuts down, these values are marked with a write flag. When a parameter value is written to the database by a client 210 in the modem software the value is also marked with the write flag, to ensure that the value is written back to persistent storage. When a parameter value is written to the database by a client 210 in the modem software the value is also marked with the write flag, to ensure that the value is written back to persistent storage.

For each layer take parameter values for parameters not already present in the cache 222 and add them to the cache 222. As the values in some layers, typically the highest priority layer, may have to be written back to persistent storage 207 before the modem shuts down, these values are marked with a write flag.

### Action 704

The parameters are stored in the cache 222 and the temporary storage is cleared.

### Action 705

In Action 705, it is checked if the last layer is reached.

### Action 706

The requested parameters are read from the file containing the next layer in priority order layer into the temporary storage.

### Action 707

Parameters already present in cache are removed from the temporary storage.

In some second embodiments relating to access layers in priority order, all values from all layers are cached in values in RAM, Random Access Memory. This will consume more RAM memory than the solution in some first embodiments described above. However, replacing the values in a layer will be faster as there is no need to reread the values in other layers from persistent storage.

When a client 210 asks the database for the value of a particular parameter, the database engine 221 searches the layers in priority order starting with the layer with the highest priority. If the parameter is found in a layer, the corresponding parameter value is returned. If the parameter is not found in a layer, the database engine 221 continues to search the next layer in priority order.

In some third embodiments, relating to a combination of some first embodiments and some second embodiments described above, some layers are merged. The highest priority layer may for example comprise parameter values written by modem software clients. The layer with the second highest priority may for example comprise values that depend on the wireless network the modem currently is connected to. These two layers may be cached in RAM Random Access Memory. Other lower priority layers that typically comprise values that don't need to be exchanged or updated frequently may be merged to a single layer. The merged layer may then be cached in RAM along with the two high priority layers.

Embodiments herein do also relate to an integrated circuit comprising circuitry for performing one or more of the method actions described above, to a wireless modem comprising the integrated circuit, and to a wireless device comprising the wireless modem.

Some embodiments described herein provide for the following advantages.

For example, some embodiments provide for a possibility to load and unload configuration profiles depending on one or more external factors such as on an operator of a Subscriber Identity Module, SIM, card, a hardware configuration, etc. Thereby, the production and logistics of wireless devices targeting a global market is made easier.

As another example, some embodiments provide for that one or more parameter values entered, e.g. written, by a modem platform software are collected in a separate database layer. Thereby, it will be easy to return to factory defaults, e.g. to pre-set values.

As yet another example, some embodiments provide for that one or more parameter values entered, e.g. written, by the modem platform software in run-time always have priority over parameters comprised in operator specific configuration profiles or in hardware specific configuration profiles. Rules for which value/-s the platform software should use improve the performance of some embodiments. Further, some embodiments herein provide a structured way of organizing configuration settings that are provided by multiple organizations, i.e. by multiple entities.

Further, in the previous description specific details have been set forth, such as particular embodiments for purposes of explanation and not limitation. However, it will be appreciated by one skilled in the art that other embodiments may be employed apart from these specific details. In some instances, detailed descriptions of well-known methods, nodes, interfaces, circuits, and devices are omitted so as not obscure the description with unnecessary detail. Those skilled in the art will appreciate that the functions described may be implemented in one or more nodes, e.g. a wireless modem or a wireless device, using hardware circuitry, e.g., analogue and/or discrete logic gates interconnected to perform a specialized function, ASICs, PLAs, etc., and/or using software programs and data in conjunction with one or more digital microprocessors or general purpose computers.

Nodes that communicate using the air interface also have suitable radio communications circuitry. Moreover, the technology may additionally be considered to be embodied entirely within any form of computer-readable memory, such as solid-state memory, magnetic disk, or optical disk comprising an appropriate set of computer instructions that would cause a processor to carry out the techniques described herein.

Hardware implementation may include or encompass, without limitation, digital signal processor, DSP, hardware, a reduced instruction set processor, hardware, e.g., digital or analogue circuitry including but not limited to Application Specific Integrated Circuits, ASIC, and/or Field Programmable Gate Arrays, FPGAs, and where appropriate state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

Although the description above comprises many specifics, they should not be construed as limiting but as merely providing illustrations of some presently preferred embodiments. The technology fully encompasses other embodiments which may become apparent to those skilled in the art. Reference to an element in the singular is not intended to mean "one and only one" unless explicitly so stated, but rather "one or more." All structural and functional equivalents to the elements of the above-described embodiments that are known to those of ordinary skill in the art are expressly incorporated herein by reference and are intended to be encompassed hereby. Moreover, it is not necessary for a device or method to address each and every problem sought to be solved by the described technology for it to be encompassed hereby.

When using the word "comprise" or "comprising" it shall be interpreted as non-limiting, in the meaning of consist at least of.

When using the word action/actions it shall be interpreted broadly and not to imply that the actions have to be carried out in the order mentioned. Instead, the actions may be carried out in any suitable order other than the order mentioned. Further, some action/actions may be optional.

The embodiments herein are not limited to the above described examples. Various alternatives, modifications and equivalents may be used.

## Claims

1. A method in a wireless modem (112) for configuration of one or more features for the wireless modem (112), the wireless modem (112) comprises a database (202, 300, 400), which database (202, 300, 400) comprises multiple layers, wherein each layer out of the multiple layers is related to a level of priority, the method comprising:
- *configuring* (301) the content of the layers in the database (202, 300, 400) by loading at least one parameter value into a specific layer out of the multiple layers,
- *requesting* (302 a specific parameter out of a set of parameters in the database (202, 300, 400),
which specific parameter out of the set of parameters is present in more than one of the multiple layers,
- *returning* (303) from the database (202, 300, 400) a value for the specific parameter from a layer with the highest level of priority out of the multiple layers.

2. The method according to claim 1, wherein the configuring (301) of the content of the layers in the database (202, 300, 400) further comprises:
- *identifying* operator information from a Subscriber Identity Module, SIM, card associated with the wireless modem (112), and
- *loading* a set of configuration parameters values into a specific layer based on the identified operator information.

3. The method according to claim 1 or 2, wherein the configuring (301) of the content of the layers in the database (202, 300, 400) further comprises:
- *identifying* information of hardware components connected to the wireless modem (112), and
- *loading* a set of configuration parameters values into a specific layer based on the identified information on hardware components.

4. The method according to any of claims 1-3, wherein the wireless modem (112) is associated with a memory (206), and wherein the configuring (301) of the content of the layers in the database (202, 300, 400) further comprises:
- *reading* information from the memory (206), and
- *loading* a set of configuration parameters values into a specific layer based on the information read from the memory (206).

5. The method according to any of claims 1-4, wherein the returning (303) from the database (202, 300, 400) further comprises:
- *searching* for the requested specific parameter in the layers of the layered database (202, 300, 400) in priority order starting with the layer with the highest priority, and
if the specific parameter is found in a layer,
- *returning* the corresponding parameter value,
if the requested parameter is not found in a layer,
- *searching* the next layer in priority order.

6. The method according to any of claims 1-5, wherein the configuring (301) of the database (202, 300, 400) comprises replacing parameters in a specific layer of the database (202, 300, 400).

7. A wireless modem (112) being adapted to configure one or more features for the wireless modem (112), the wireless modem (112) comprising:
a database (202, 300, 400), which database (202, 300, 400) comprises multiple layers, wherein each layer out of the multiple layers is related to a level of priority,
the wireless modem (112) being associated with a Software, SW, configuration control (201) adapted to configure the content of the layers in the database (202, 300, 400) by loading at least one parameter value into a specific layer out of the multiple layers,
wherein a specific parameter in the database (202, 300, 400) is requested, which specific requested parameter out of a set of parameters is present in more than one of the multiple layers,
a database engine (221) adapted to return from the database (202, 300, 400) a value for the specific requested parameter from a layer with the highest level of priority out of the multiple layers.

8. The wireless modem (112) according to claim 7 further comprising:
a SIM control (203) for identifying operator information from a Subscriber Identity Module, SIM, card associated with the wireless modem (112), the database engine (221) being adapted to load a set of configuration parameters values into a specific layer based on the identified operator information, whereby the content of the layers in the database (202, 300, 400) is configured.

9. The wireless modem (112) according to claim 7 or 8 further comprising:
a hardware control (205) for identifying information of hardware components connected to the wireless modem (112), the database engine (221) being adapted to load a set of configuration parameters values into a specific layer based on the identified information on hardware components, whereby the content of the layers in the database (202, 300, 400) is configured.

10. The wireless modem (112) according to any of claims 7-9, the wireless modem being associated with a memory (206), and the database engine (221) being adapted to load a set of configuration parameters values into a specific layer based on the information read from the memory (206), whereby the content of the layers in the database (202, 300, 400) is configured.

11. The wireless modem (112) according to any of claims 7-10,
wherein the database engine (221) is adapted to search for the requested specific parameter in the layers of the layered database (202, 300, 400) in priority order starting with the layer with the highest priority, and
if the specific parameter is found in a layer,
return the corresponding parameter value,
if the requested parameter is not found in a layer,
search the next layer in priority order.

12. The wireless modem (112) according to any of claims 7-11 further comprising
a modem algorithm module (211) adapted to read algorithm parameters from the database (202, 300, 400).

13. The wireless modem (112) according to any of claims 7-12 further comprising a modem feature module (212) adapted to implement a specific modem feature by using a parameter in the database (202, 300, 400) to determine if the feature should be activated or not.

14. The wireless modem (112) according to any of claims 7-13, wherein the database engine (221) is adapted to configure the database (202, 300, 400) by replacing parameters in a specific layer of the database (202, 300, 400).

15. A wireless device (110) comprising a wireless modem (112) according to any of claims 7-14.

16. An integrated circuit comprising circuitry adapted to perform the method according to any of claims 1-8.

17. A wireless modem comprising an integrated circuit according to claim 17.
